# EUROPEAN PATENT SPECIFICATION

(11) **EP 1 406 166 B1**
(45) Date of publication and mention of the grant of the patent: **13.07.2011**
(21) Application number: 02022042.2
(22) Date of filing: 01.10.2002
(51) Int. Cl.: G06F 9/44

(54) **Validation of scripting languages with interfaces using annotations in XML**
Prüfung von Skriptsprachen mit Schnittstellen mittels Annotationen in XML
Validation de langages script avec interfaces en utilisant des annotations en XML

(43) Date of publication of application: 07.04.2004
(73) Proprietor: SAP AG, 69190 Walldorf (DE)
(72) Inventor: Dietl, Josef, 69226 Nussloch (DE); Hammerich Rainer, 69231 Rauenberg (DE)
(74) Representative: Müller-Boré & Partner Patentanwälte

(56) References cited:
- POLL E ET AL: "Formal specification of the JavaCard API in JML: the APDU class" COMPUTER NETWORKS, ELSEVIER SCIENCE PUBLISHERS B.V., AMSTERDAM, NL, vol. 36, no. 4, 16 July 2001 (2001-07-16), pages 407-421, XP004304906 ISSN: 1389-1286
- FRIEDMAN-HILL E J : "Software verification and functional testing with XML documentation " PROCEEDINGS OF THE 34TH ANNUAL HAWAII INTERNATIONAL CONFERENCE ON SYSTEM SCIENCES, HICSS-34, January 2002 (2002-01), XP002234270 Maui, HI, USA
- FREUND S N ET AL: "A FORMAL FRAMEWORK FOR THE JAVA BYTECODE LANGUAGE AND VERIFIER" ACM SIGPLAN NOTICES, ASSOCIATION FOR COMPUTING MACHINERY, NEW YORK, US, vol. 34, no. 10, October 1999 (1999-10), pages 147-166, XP001148316 ISSN: 0362-1340
- PAINCHAUD F ET AL: "On the implementation of a stand-alone Javabytecode verifier" ENABLING TECHNOLOGIES: INFRASTRUCTURE FOR COLLABORATIVE ENTERPRISES, 2000. (WET ICE 2000). PROEEDINGS. IEEE 9TH INTERNATIONAL WORKSHOPS ON GAITHERSBURG, MD, USA 14-16 JUNE 2000, LOS ALAMITOS, CA, USA,IEEE COMPUT. SOC, US, 14 June 2000 (2000-06-14), pages 189-194, XP010522934 ISBN: 0-7695-0798-0

## Description

The invention relates in general to programmable electronic multipurpose computers.

Scripting languages, such as JavaScript and Perl, can be used to program applications to be run on computer systems. Correctness of the programmed scripting code is desirable, as with any computer programming in general. A program can be checked or validated prior to use to reduce errors occurring during runtime of the code.

E. Poll et al. "Formal Specification of the JavaCard API in JML: APDU class", Computer Networks, Elsevier Publisher B.V., Amsterdam, NL, Vol. 36, No. 4, July 2001 refers to formal specification and verification of JavaCard source code, XP 430 4906. In this connection, the Java Modeling Language (JML) is used to specify pre- and postconditions and invariants for JavaCard source code. To formally verify JML-annotated JavaCard source code (before runtime) which cannot be statically checked using a static type checker such as ESC/Java, a LOOP tool translates the JML-annotated source code into proof obligations which may serve as input for a theorem prover such as PVS or Isabelle. It is an object of the invention to reduce the number of errors in computer code. Therefore, the invention provides for a computer implemented method for validation of computer code according to claim 1. By validating both sets of instructions with the script code used, the number of errors will be reduced.

Objects, aspects and advantages of the invention will be better understood from the following detailed description of a preferred embodiment of the invention.

A computer program can be defined in design documentation and specifications. From this starting point an actual implementation can be coded using a suitable programming language.

According to the invention the coding is done using a two-component interface-classes model, and a script coded section. Non-limiting examples of such programming languages are compiler languages and object oriented programming languages. In compiler languages, such as for example Modula-2, these components are implemented as definition modules and implementation modules. In object oriented programming languages, such as for example Java, C++, C#, and Modula-3, the components are implemented as interfaces and classes, wherein interfaces are equivalent to definition modules and classes are equivalent to implementation modules. The script-coded section can be programmed using any suitable script language, such as for example JavaScript and Perl.

Interfaces in object-oriented programming are used for several purposes. To function for example as a record of promises (with respect to functionality) given by one ("provider") class. This fact is used to verify automatically during compilation whether a second "customer" object is relying on features of a class that have not been promised. Also the interface is used to verify whether the actual implementation of the provider class keeps all its promises.

This allows inspection of the code during compilation and to test or validate whether errors with respect to these fundamentals would occur during runtime. For example methods that are offered by the object can be checked, as well as compliance of object classes with the respective interfaces. If errors are found these can be reported during compilation, so that the errors in the source code can be corrected. Thus runtime errors are reduced in the compiled code.

For example, if an interface promises the availability of a certain method but the method is not present in the implementation, a "customer" of that method would fail at latest at run time. Interfaces enable modern compiler languages to verify the availability of the method during compilation, eliminating this failure mode with the associated debugging effort.

Another example is that can be checked whether a method of an object is called in the code that is not present in the interface. This would lead in the compiled code during runtime to errors. By checking the interface, this can be caught at the outset, eliminating this failure mode during runtime.

In one embodiment of the invention, a program is programmed in object oriented style using two separate tree structures, written in XML, wherein the first tree structure represents the classes to be implemented and the second tree structure represents the associated interfaces. Note that the invention is not limited to the implementation shown in this example, and that any programming implementation yielding a set of classes/definitions and interfaces/implementations can be employed. Based on this tree structures in XML executable programs can be generated, for example using Extensible Stylesheet Language (XSL) or Apache Velocity. XSL defines the code using two parts; a language for transforming XML documents, and an XML vocabulary for specifying formatting semantics. An XSL style sheet specifies the presentation of a class of XML documents by describing how an instance of the class is transformed into an XML document that uses the formatting vocabulary. On the XML level a syntax check is performed between the interface description and the implementation class description.

Using this method executable programs can be generated for different platforms, for example ABAP, .Net and JavaScript. In case the executable code generated does implement classes and interfaces, such as is the case with ABAP and .Net, the validity of that code can be verified with a compiler program that performs the usage and implementation checks at the semantics level. Then executable program code is generated from the interface description and from the implementation class description. The thus generated code can then use or call the script coded section when needed.

In this example, the generation of executable programs in script languages, such as for example JavaScript is done by first generating an intermediate code, using a language that supports classes and interfaces. In this example, the intermediate code used can be Java, with implementation for interfaces and classes. The validity of these interfaces and classes is then proved using methods as described above, i.e. using a compiler that performs the usage and implementation checks at the semantics level. This can be done for example by comparing the resulting interfaces with the classes obtained. A successful validation of the Java code means that the original XML code is correct for at least the interface and classes definition. Further the script code section is checked by running it trough an interpreter. This can be for example a JavaScript interpreter if the script code is written in JavaScript. Such interpreters or parsers are known per se in the art. The interpreter yields at least a symbol table including various elements, such as for example variables, used by the script code. The information included in the symbol table is compared to the original XML implementation description. From this comparison can be derived whether the script code is compatible with the implementation description. If the script code is validated accordingly, executable code generated from the sets of definition and implementation instructions, is validated for use with the script code. Thus validated, the number of runtime errors is reduced.

In a further embodiment of the invention, two separate tree structures are provided for, together with a script code section. The first tree structure describes interfaces, while the second tree structure describes content in the form of classes for a HTML document. The script code section provides functionality for the HTML document, such as for example scrolling of text. The tree structures can be programmed for example in XML, and the script code section can be programmed in JavaScript.

The invention further relates to a program storage device readable by a computer system, embodying a program of instructions executable by the computer system to perform any method according to the invention. As this invention may be embodied in several forms, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. Computer implemented method for validation of computer code, comprising
providing a computer program by defining at least one set of classes, at least one set of interfaces and at least a script code section, wherein the program is provided in object-oriented style using two separate tree structures in XML, wherein the first tree structure represents the set of classes to be implemented and the second tree structure represents the set of interfaces associated with the set of classes;
performing on the tree structures in XML a syntax check between the set of interfaces and the set of classes;
generating executable programs from the tree structures in XML using an Extensible Stylesheet Language (XSL) style sheet;
validating the generated executable programs with a compiler program that performs usage and implementation checks at a semantics level; and
validating said script code section by:
generating an intermediate code from the script code section, using a language that supports classes and interfaces;
validating the intermediate code using the compiler program;
checking the script code section by running it through a parser yielding at least one symbol table; and
comparing information included in the symbol table to the set of interfaces represented in the second tree structure to derive whether the script code section is compatible with the set of interfaces.

2. Method according to claim 1, wherein said classes and interfaces are defined in Java language.

3. Method according to claim 1 or 2, wherein said script code section is JavaScript.

4. A program storage device readable by a computer system, embodying a program of instructions executable by the computer system to perform a method according to any of claims 1 to 3.

## Patentansprüche

1. Computer-implementiertes Verfahren zur Validierung von Computercode, umfassend:
Bereitstellen eines Computerprogramms durch Bestimmen wenigstens einer Menge von Klassen, wenigstens einer Menge von Schnittstellen und wenigstens eines Skriptcodeabschnitts, wobei das Programm in einem objektorientierten Stil unter Verwendung von zwei getrennten Baumstrukturen in XML bereitgestellt wird, wobei die erste Baumstruktur die Menge von Klassen, die implementiert werden, darstellt, und die zweite Baumstruktur die mit der Menge von Klassen assoziierten Menge von Schnittstellen, darstellt;
Ausführen einer Syntaxprüfung auf den Baumstrukturen in XML zwischen der Menge von Schnittstellen und der Menge von Klassen;
Erzeugen ausführbarer Programme von den Baumstrukturen in XML unter der Verwendung einer Extensible Stylesheet Language (XSL) Stilvorlage bzw. - blatts;
Validieren der erzeugten ausführbaren Programme mit einem Compilerprogramm, das Nutzungs- und Implementierungsprüfungen auf einer semantischen Ebene ausführt; und
Validieren des Skriptcodeabschnitts durch:
Erzeugen eines Zwischencodes von dem Skriptcodeabschnitt unter Verwendung einer Sprache, die Klassen und Schnittstellen unterstützt;
Validieren des Zwischencodes unter Verwendung des Compilerprogramms;
Prüfen des Skriptcodeabschnitts indem er durch einen wenigstens eine Symboltabelle ergebenden Parser Ablaufen gelassen wird; und
Vergleichen der Information bzw. der Informationen, welche in der Symboltabelle beinhaltet sind, mit der in der zweiten Baumstruktur dargestellten Menge von Schnittstellen, um abzuleiten, ob der Skriptcodeabschnitt mit der Menge von Schnittstellen kompatibel ist.

2. Verfahren nach Anspruch 1, wobei die Klassen und Schnittstellen in der Sprache Java definiert sind.

3. Verfahren nach Anspruch 1 oder 2, wobei der Skriptcodeabschnitt Java Skript ist.

4. Programmspeichereinrichtung, welche durch ein Computersystem lesbar ist und ein Programm von durch das Computersystem ausführbaren Instruktionen verkörpert, um ein Verfahren nach einem der Ansprüche 1 bis 3 auszuführen.

## Revendications

1. Procédé mis en oeuvre par ordinateur pour la validation de code informatique, comprenant
la fourniture d'un programme informatique en définissant au moins un ensemble de classes, au moins un ensemble d'interfaces et au moins une section de code script, dans lequel le programme est fourni dans un style orienté objet utilisant deux arborescences séparées en XML, dans lequel la première arborescence représente l'ensemble de classes devant être mis en oeuvre et la seconde arborescence représente l'ensemble d'interfaces associé à l'ensemble de classes ; la réalisation sur les arborescences en XML d'un contrôle de syntaxe entre l'ensemble d'interfaces et l'ensemble de classes ;
la génération de programmes exécutables depuis les arborescences en XML en utilisant une feuille de style XSL ;
la validation des programmes exécutables générés avec un compilateur qui réalise des contrôles d'usage et de mise en oeuvre à un niveau sémantique ; et
la validation de ladite section de code script par :
la génération d'un code intermédiaire depuis la section de code script en utilisant un langage qui supporte des classes et interfaces ;
la validation du code intermédiaire en utilisant le compilateur ;
le contrôle de la section de code script en la faisant passer à travers un analyseur syntaxique donnant au moins un tableau de symboles ; et
la comparaison d'informations incluses dans le tableau de symboles à l'ensemble d'interfaces représenté dans la seconde arborescence pour dériver si la section de code script est compatible avec l'ensemble d'interfaces.

2. Procédé selon la revendication 1, dans lequel lesdites classes et interfaces sont définies en langage Java.

3. Procédé selon la revendication 1 ou 2, dans lequel ladite section de code script est JavaScript.

4. Dispositif de stockage de programmes lisible par un système informatique, mettant en oeuvre un programme d'instructions exécutable par le système informatique pour réaliser un procédé selon l'une quelconque des revendications 1 à 3.
